# EUROPEAN PATENT SPECIFICATION

(11) **EP 3 527 472 B1**
(45) Date of publication and mention of the grant of the patent: **15.04.2020**
(21) Application number: 19150870.4
(22) Date of filing: 09.01.2019
(51) Int. Cl.: B62K 11/10, B62J 1/12, B62K 19/30, B62K 19/46

(54) **STRADDLED VEHICLE**
GRÄTSCHSITZFAHRZEUG
VÉHICULE À ENFOURCHER

(30) Priority: 14.02.2018 JP 2018024374
(43) Date of publication of application: 21.08.2019
(73) Proprietor: YAMAHA HATSUDOKI KABUSHIKI KAISHA, Iwata-shi, Shizuoka 438-8501 (JP)
(72) Inventor: NAGAOKA, Masaki, Iwata-shi, Shizuoka 438-8501 (JP)
(74) Representative: Grünecker Patent- und Rechtsanwälte PartG mbB

(56) References cited:
- WO-A1-2016/159891
- CN-A- 1 195 628
- CN-A- 102 910 226
- CN-Y- 2 908 291
- JP-A- 2013 184 609

## Description

### TECHNICAL FIELD

The present invention relates to a straddled vehicle.

### BACKGROUND

There exist straddled vehicles in which an urging force is applied to the seat in an opening direction thereof in order to reduce the operating force for opening the seat. In Japanese Patent Application Laid-open No. 2009-67285, for example, the damper applies the urging force to the seat.

The prior-art document WO 2016/159891 A1 discloses the preamble of claim 1.

### SUMMARY

In the application of the urging force to the seat in the opening direction thereof in order to reduce the operating force for opening the seat, the speed of opening the seat tends to be excessively fast. In such a case where the speed of opening the seat is excessively fast, the seat tends to bounce back and swing after the seat is opened completely; the user-friendliness is poor. Therefore, it is desirable to improve the user-friendliness by applying a damping force to the seat, so that the speed of opening the seat does not become excessively fast.

Furthermore, an urging force large enough to overcome the self-weight of the seat is required in the beginning of opening the seat. For this reason, preferably, the damping force is not generated or is small in the beginning of opening the seat. However, immediately before the seat is opened completely, it is preferred that a large damping force be applied in order to amply slow down the speed of opening the seat. It is therefore desirable to appropriately set the speed of the seat by adjusting the damping force according to the degree of opening of the seat.

Meanwhile, straddled vehicles are demanded to provide an ample storage box under the seat so that helmets of various shapes can be stored therein. Therefore, in a case where a damper is used, as in Japanese Patent Application Laid-open No. 2009-67285, it is difficult to secure ample storage capacity due to the size of the damper itself or the space for the damper holding structure.

An object of the present invention is to provide a straddled vehicle that is configured not only to secure an ample storage box but also to appropriately set the speed of the seat while reducing the operating force for opening the seat, by adjusting the damping force on the seat according to the degree of opening of the seat.

Said object is achieved by providing a straddled vehicle according to claim 1. A straddled vehicle according to one aspect of the present invention includes a seat, a storage box, and an opening/closing mechanism. The storage box is disposed under the seat. The opening/closing mechanism supports the seat in such a manner that the seat is movable between a closed position where the storage box is closed and a fully-opened position where the storage box is opened. The opening/closing mechanism includes a tension coil spring and an elastic member. The tension coil spring includes a coil portion and assists the driver in opening the seat. The elastic member is provided on an outer periphery of the coil portion. The tension coil spring is disposed so as to contract as the seat moves toward the fully-opened position. At least before the seat reaches the fully-opened position, the outer periphery of the coil portion and an inner periphery of the elastic member come into contact with each other.

In the straddled vehicle according to the present aspect, an urging force for opening the seat is obtained by the extension coil spring. In addition, a damping force is obtained by bringing the outer periphery of the coil portion and the inner periphery of the elastic member into contact with each other. In particular, the tension coil spring contracts as the seat is moved toward the fully-opened position by the urging force of the tension coil spring. As a result of the contraction of the tension coil spring, an outer diameter of the tension coil spring expands, thereby increasing the reaction force from the elastic member provided around the tension coil spring. Consequently, as the seat moves toward the fully-opened position, the damping force applied to the seat increases due to the reaction force from the elastic member. Thus, either the damping force is not generated or can be reduced in the beginning of opening the seat, and the damping force can be increased as the seat moves toward the fully-opened position. In this manner, the speed of the seat can appropriately be set according to the degree of opening of the seat, while reducing the operating force for opening the seat. Moreover, with such simple structures as the tension coil spring and the elastic member provided around the tension coil spring, the urging force and the damping force can be obtained. Accordingly, an ample storage box can be ensured.

The elastic member may be in the shape of a tube having a through-hole. The tension coil spring may be located in the through-hole of the elastic member. In this case, with such a simple structure in which the tension coil spring is located in the through-hole of the elastic member, the urging force and the damping force can be obtained.

When the seat is located in the closed position, the outer diameter of the tension coil spring may be larger than an inner diameter of the elastic member in a natural state thereof. The outer diameter of the tension coil spring may increase as the seat moves toward the fully-opened position. In this case, the tension coil spring is in contact with the inner periphery of the elastic member at all times. For this reason, the damping force can be obtained from the beginning of opening the seat. Thus, even in a case where the stroke of the tension coil spring is made short for the purpose of downsizing the vehicle, an auxiliary force of the opening/closing motion and the damping force on the seat can easily be adjusted.

When the seat is located in the closed position, the outer diameter of the tension coil spring may be smaller than the inner diameter of the elastic member. When the seat is located in a predetermined intermediate position between the closed position and the fully-opened position, the outer diameter of the tension coil spring may be equal to the inner diameter of the elastic member. The outer diameter of the tension coil spring may increase as the seat moves toward the fully-opened position. In this case, the damping force can be obtained in the middle of opening the seat.

The straddled vehicle may further include a vehicle body frame, a first stay, and a second stay. The first stay may be mounted on the vehicle body frame. The second stay may be mounted on the seat and supported so as to be rotatable with respect to the first stay. The tension coil spring may include a first end portion connected to the first stay and a second end portion connected to the second stay. In this case, the second stay rotates with respect to the first stay in response to the opening and closing of the seat. Therefore, the urging force and the damping force can be obtained as a result of expansion and contraction of the tension coil spring.

The elastic member may be disposed between the first end portion and the second end portion. In this case, the opening/closing mechanism can be downsized.

The first stay may include a support portion and a first connection portion. The support portion may support the second stay in a rotatable manner. The first connection portion may be connected to the first end portion of the tension coil spring. The second stay may include a second connection portion. The second connection portion may be connected to the second end portion of the tension coil spring. The first connection portion may be positioned rearward of the support portion. The second connection portion may be positioned forward of the support portion. In this case, as the second stay rotates with respect to the first stay in response to the opening and closing of the seat, the distance between the first connection portion and the second connection portion increases or decreases. Thus, the urging force and the damping force can be obtained as a result of expansion and contraction of the tension coil spring.

The first connection portion and the second connection portion may be positioned below the support portion. The tension coil spring and the elastic member may be positioned below the support portion. According to such a configuration, the opening/closing mechanism can be downsized.

When the straddled vehicle is viewed planarly, the tension coil spring and the elastic member may overlap with the second stay. According to such a configuration, the opening/closing mechanism can be downsized.

The tension coil spring may be disposed so as to expand and contract in a front-rear direction of the vehicle. In this case, the stroke length of the tension coil spring is limited in order to secure a footrest space in front of the storage box. However, even in such a case, the auxiliary force of the opening/closing motion and the damping force on the seat can easily be adjusted in the straddled vehicle according to the present aspect.

The straddled vehicle may further include an operation switch for opening the seat. In this case, the driver can open the seat by operating the operation switch. Furthermore, even in a case where the operation switch for opening/closing the seat is located away from the seat, appropriate urging force and damping force for opening and closing the seat can be obtained, improving user-friendliness for the driver.

### BRIEF DESCRIPTION OF THE DRAWINGS

FIG. 1 is a side view of a straddled vehicle according to an embodiment.
FIG. 2 is a side view showing an opening/closing mechanism, a lock mechanism, and a seat.
FIG. 3 is a side view of the opening/closing mechanism.
FIG. 4 is a perspective view of the opening/closing mechanism.
FIG. 5 is a perspective view of the opening/closing mechanism.
FIG. 6 is a front view of the opening/closing mechanism.
FIG. 7 is a rear view of the opening/closing mechanism.
FIG. 8 is a top view of the opening/closing mechanism.
FIG. 9 is a perspective view of a first spring unit.
FIG. 10 is a side view showing the opening/closing mechanism in a closed position and a fully-opened position.
FIG. 11 is a schematic diagram showing a cross section of the first spring unit.
FIG. 12 is a schematic diagram showing a cross section of the first spring unit according to a modification.

### DETAILED DESCRIPTION OF THE PREFERRED EMBODIMENTS

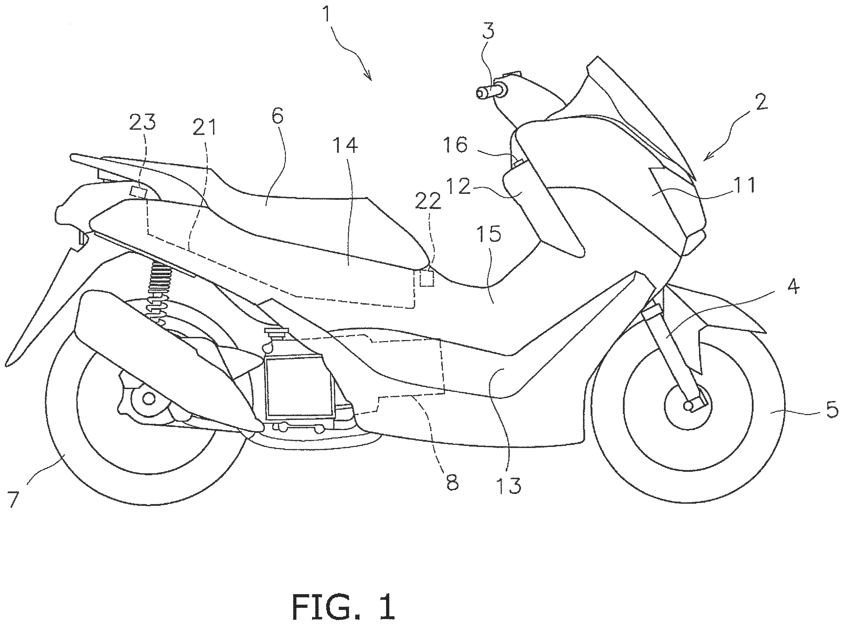

A straddled vehicle according to an embodiment is now described hereinafter with reference to the drawings. FIG. 1 is a side view of a straddled vehicle 1 according to an embodiment. The straddled vehicle 1 according to the present embodiment is a scooter type vehicle. As shown in FIG. 1, the straddled vehicle 1 includes a vehicle main body 2, handlebars 3, a steering device 4, a front wheel 5, a seat 6, a rear wheel 7, and an engine 8.

Note that in the present specification the front-rear direction and the lateral direction are referred to as the directions viewed by a driver seated on the seat 6. The term "connection" indicates not only direct connection but also indirect connection. Also, the term "connection" is not limited to an aspect in which separate members are fixed to each other but includes an aspect in which a plurality of portions are arranged in a continuous manner in an integrated member.

The handlebars 3 are connected to an upper portion of the steering device 4. The steering device 4 supports the front wheel 5 in a rotatable manner. The seat 6 is supported by the vehicle main body 2. The engine 8 is disposed under the seat 6. The rear wheel 7 is supported by the vehicle main body 2 so as to be able to pivot together with the engine 8.

The vehicle main body 2 includes a front cover 11, a leg shield 12, a foot board 13, and a rear cover 14. The front cover 11 is disposed in front of the handlebars 3. The leg shield 12 is disposed behind the front cover 11, in front of the seat 6. The foot board 13 is disposed between the leg shield 12 and the seat 6.

The foot board 13 includes a center tunnel portion 15. The center tunnel portion 15 protrudes upward and is disposed in the center of the foot board 13 in a vehicle width direction. The foot board 13 may have a flat shape. The rear cover 14 is disposed under the seat 6.

The vehicle main body 2 is provided with an operation switch 16 for opening the seat 6. The operation switch 16 is disposed under the handlebars 3. The operation switch 16 is provided on the leg shield 12.

The vehicle main body 2 includes a storage box 21, an opening/closing mechanism 22, and a lock mechanism 23. The storage box 21 is disposed under the seat 6. The storage box 21 is capable of storing articles such as a helmet. The opening/closing mechanism 22 is disposed in front of the storage box 21. The opening/closing mechanism 22 overlaps with the storage box 21 in a front view of the vehicle.

The opening/closing mechanism 22 supports the seat 6 so as to be able to open and close the storage box 21. The opening/closing mechanism 22 supports a front end portion of the seat 6. At least a part of the opening/closing mechanism 22 is disposed under the seat 6. At least a part of the opening/closing mechanism 22 is disposed under the center tunnel portion 15. At least a part of the opening/closing mechanism 22 overlaps with the seat 6 in a plan view of the vehicle. At least a part of the opening/closing mechanism 22 overlaps with the center tunnel portion 15 in the plan view of vehicle.

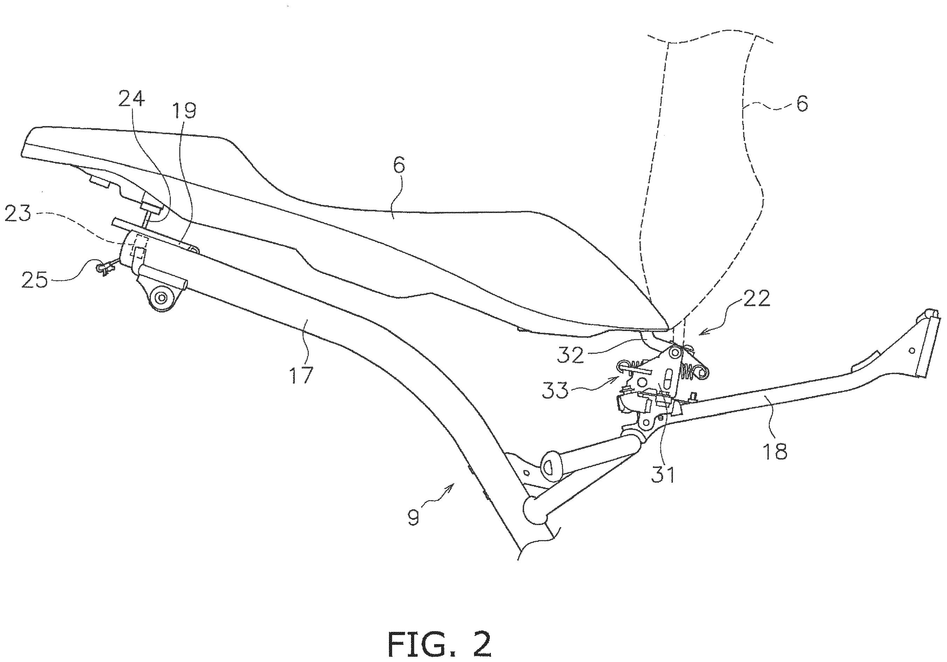

The lock mechanism 23 locks the seat 6 to a closed position. FIG 2 is a side view showing the opening/closing mechanism 22, the lock mechanism 23, and the seat 6. In FIG. 2 the solid line shows the seat 6 located in the closed position. In FIG. 2 the broken line shows the seat 6 located in a fully-opened position.

As shown in FIG. 2, the vehicle main body 2 includes a vehicle body frame 9. The vehicle body frame 9 includes a seat frame 17 and a center frame 18. The seat frame 17 is disposed under the seat 6. A bracket 19 is mounted on the seat frame 17. The lock mechanism 23 is mounted on the seat frame 17 via the bracket 19.

A locking member 24 protruding downward from a bottom surface of the seat 6 is connected to the seat 6. The lock mechanism 23 locks the seat 6 to the closed position by coming into engagement with the locking member 24. The lock mechanism 23 is connected to the operation switch 16 via a cable 25. The lock mechanism 23 releases the locking member 24 through operation of the operation switch 16. Consequently, the seat 6 is unlocked.

The opening/closing mechanism 22 supports the seat 6 in such a manner that the seat 6 is movable between the closed position where the storage box 21 is closed and the fully-opened position where the storage box 21 is opened. The opening/closing mechanism 22 is mounted on the center frame 18. The center frame 18 is connected to the seat frame 17. The center frame 18 is disposed under the center tunnel portion 15.

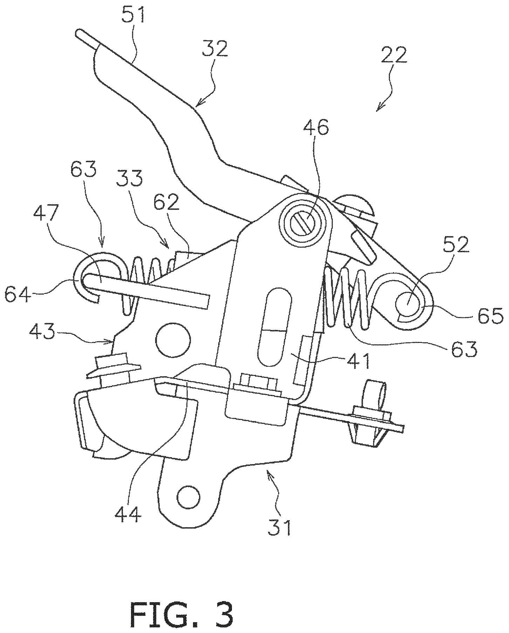

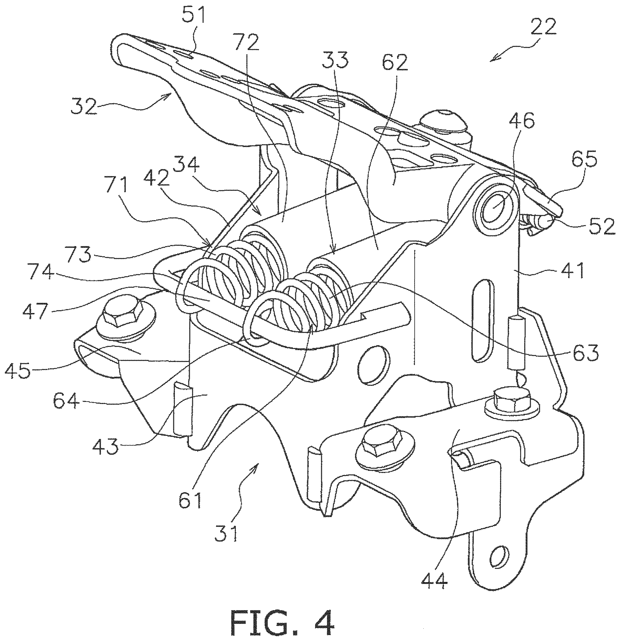

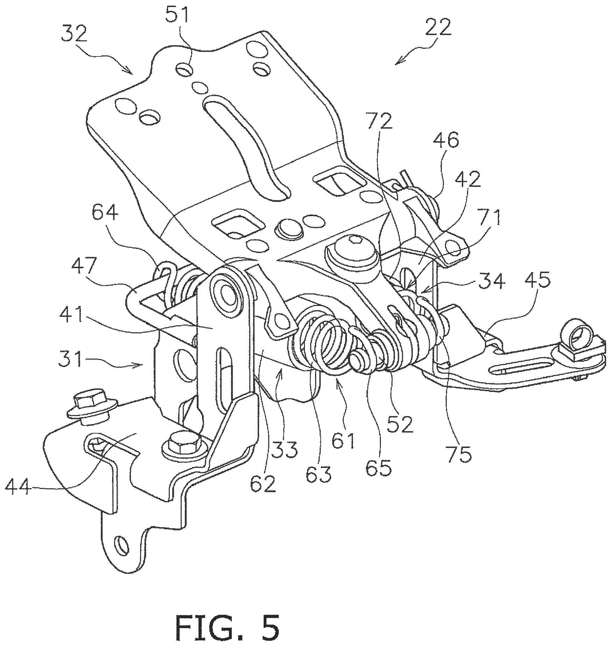

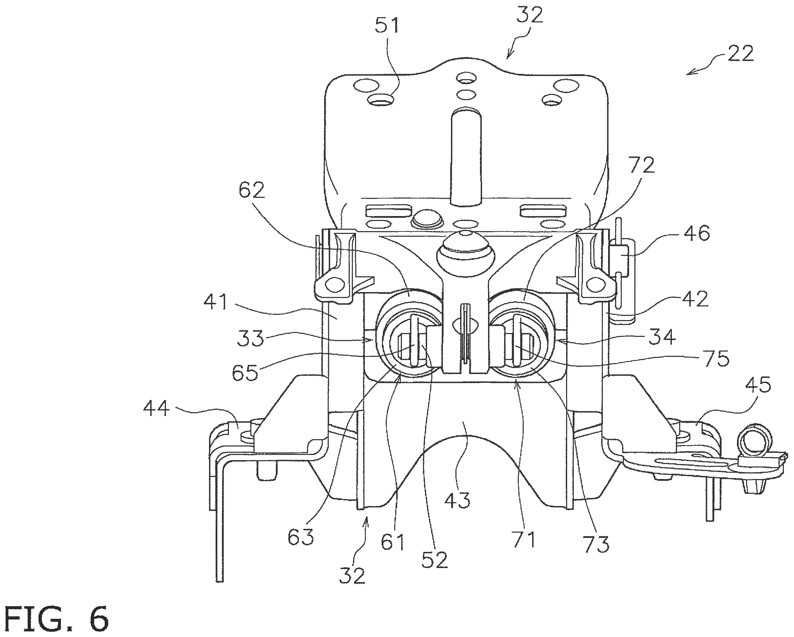

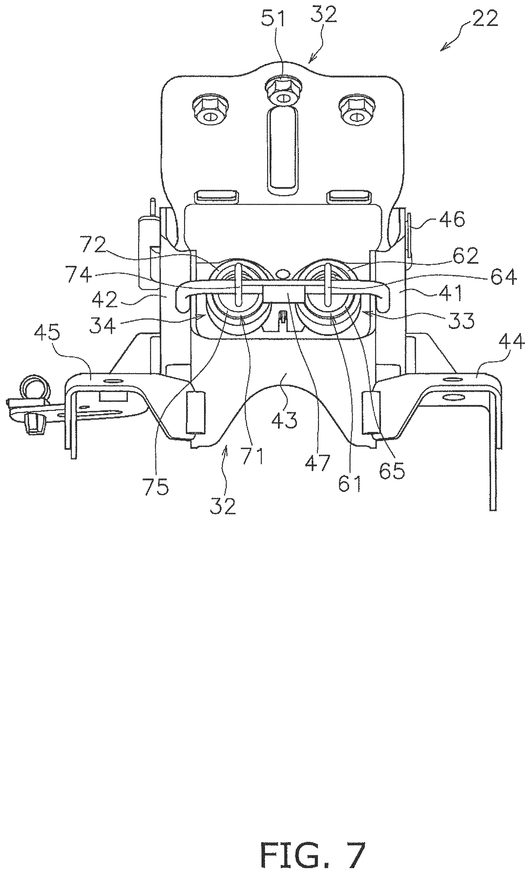

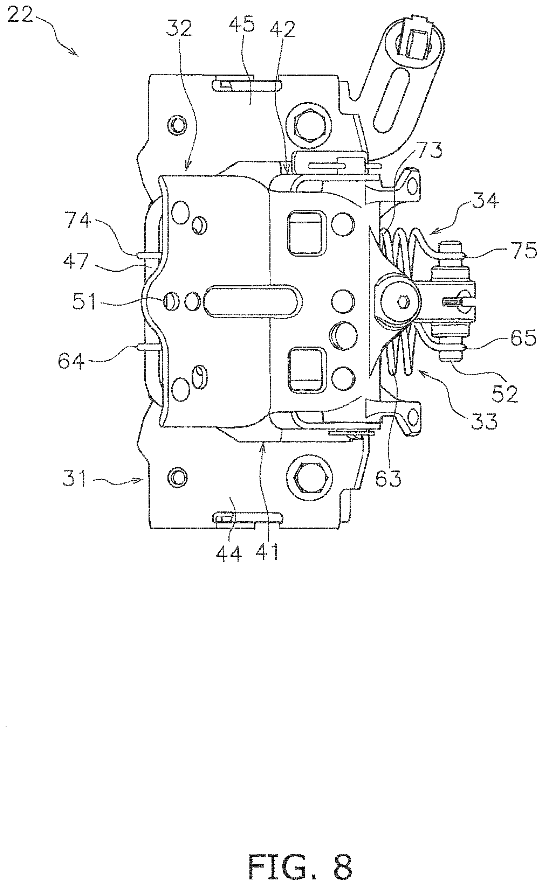

FIG. 3 is a side view of the opening/closing mechanism 22. FIGS. 4 and 5 are each a perspective view of the opening/closing mechanism 22. FIG. 6 is a front view of the opening/closing mechanism 22. FIG. 7 is a rear view of the opening/closing mechanism 22. FIG. 8 is a top view of the opening/closing mechanism 22. As shown in FIGS. 3 to 8, the opening/closing mechanism 22 includes a first stay 31, a second stay 32, a first spring unit 33, and a second spring unit 34.

The first stay 31 is mounted on the center frame 18. The first stay 31 is in the shape of a bent plate. The first stay 31 includes a first side portion 41, a second side portion 42, and a coupling portion 43. The first side portion 41 and the second side portion 42 are disposed with a space therebetween in the vehicle width direction. The coupling portion 43 extends in the vehicle width direction and connects a rear portion of the first side portion 41 and a rear portion of the second side portion 42 to each other. The first stay 31 includes a first attachment portion 44 and a second attachment portion 45. The first attachment portion 44 is connected to a lower portion of the first side portion 41. The second attachment portion 45 is connected to a lower portion of the second side portion 42. The first attachment portion 44 and the second attachment portion 45 are fixed to the center frame 18 by fixing means such as bolts.

The first stay 31 includes a support portion 46 for rotatably supporting the second stay 32. The support portion 46 is a pin-like member extending in the vehicle width direction. The support portion 46 is disposed across the first side portion 41 and the second side portion 42 and supported by the first side portion 41 and the second side portion 42.

The first stay 31 includes a first connection portion 47. The first connection portion 47 is connected to the first spring unit 33 and the second spring unit 34. The first connection portion 47 is a rod-like member. The first connection portion 47 extends in the vehicle width direction. The first connection portion 47 is connected to the first side portion 41 and the second side portion 42. The first connection portion 47 is disposed across the first side portion 41 and the second side portion 42. The first connection portion 47 is located rearward of the support portion 46.

The second stay 32 is mounted on a lower surface of a front portion of the seat 6. The second stay 32 is supported so as to be rotatable with respect to the first stay 31. The second stay 32 includes a seat connection portion 51 and a second connection portion 52. The seat connection portion 51 is provided on one end portion of the second stay 32 in a longitudinal direction. The seat connection portion 51 is fixed to the lower surface of the seat 6 by fixing means such as a bolt. The second connection portion 52 is provided on the other end portion of the second stay 32 in the longitudinal direction.

The second connection portion 52 is a pin-like member extending in the vehicle width direction. The second connection portion 52 is connected to the first spring unit 33 and the second spring unit 34. The second connection portion 52 is located forward of the support portion 46. The first connection portion 47 and the second connection portion 52 are located below the support portion 46. In the longitudinal direction of the second stay 32, the support portion 46 is disposed between the seat connection portion 51 and the second connection portion 52.

When opening the seat 6, the first spring unit 33 and the second spring unit 34 apply an elastic force and a damping force to the second stay 32 respectively. The first spring unit 33 and the second spring unit 34 are disposed below the second stay 32. The first spring unit 33 and the second spring unit 34 overlap with the second stay 32 in the plan view of the vehicle. The first spring unit 33 and the second spring unit 34 are disposed between the first side portion 41 and the second side portion 42 of the first stay 31. The first spring unit 33 and the second spring unit 34 overlap with the first side portion 41 and the second side portion 42 of the first stay 31 in a side view of the vehicle. The first spring unit 33 and the second spring unit 34 are located below the support portion 46.

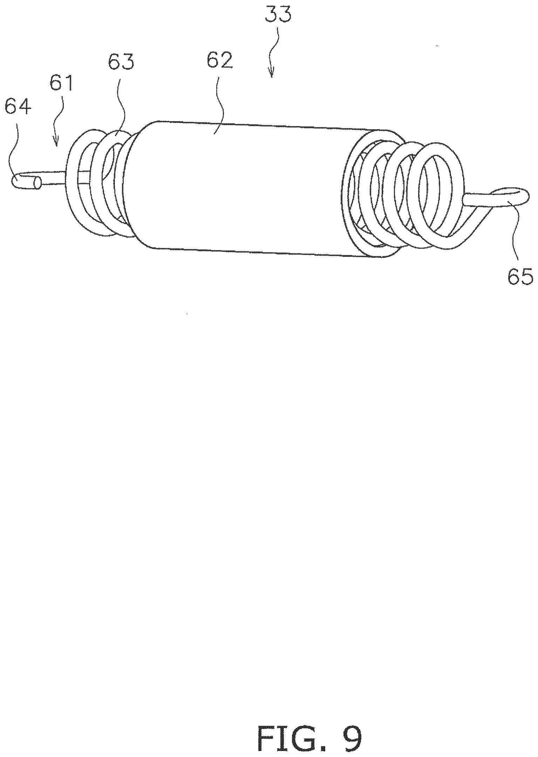

FIG. 9 is a perspective view of the first spring unit 33. The first spring unit 33 includes a first tension coil spring 61 and a first elastic member 62. When opening the seat 6, the first tension coil spring 61 applies to the second stay 32 an elastic force in the direction of opening the seat 6, to assist the driver in opening the seat 6.

The first tension coil spring 61 includes a coil portion 63, a first end portion 64, and a second end portion 65. The coil portion 63 is disposed between the first end portion 64 and the second end portion 65. The first end portion 64 is connected to the first connection portion 47 of the first stay 31. The first end portion 64 is located closer to the storage box 21 than the second end portion 65 is. The second end portion 65 is connected to the second connection portion 52 of the second stay 32.

The first tension coil spring 61 is disposed in such a manner that the axis of the coil portion 63 is oriented in the front-rear direction. The first tension coil spring 61 is disposed so as to expand and contract in the front-rear direction of the vehicle as the second stay 32 rotates with respect to the first stay 31. The tension coil spring is disposed so as to contract as the seat 6 moves toward the fully-opened position.

When the seat 6 is opened, the first elastic member 62 applies a damping force against the motion of the second stay 32 moving toward the fully-opened position. The first elastic member 62 is provided on an outer periphery of the coil portion 63. The first elastic member 62 is in the shape of a tube having a through-hole. The tension coil spring is located in the through-hole of the elastic member. The first elastic member 62 is, for example, a rubber tube. However, the first elastic member 62 may be formed of an elastic body other than rubber.

The first elastic member 62 is disposed between the first end portion 64 and the second end portion 65 of the first tension coil spring 61. In other words, the first end portion 64 protrudes from one end of the first elastic member 62. The second end portion 65 protrudes from the other end of the first elastic member 62.

The second spring unit 34 and the first spring unit 33 are arranged side by side in the vehicle width direction. The second spring unit 34 includes a second tension coil spring 71 and a second elastic member 72. The second tension coil spring 71 includes a coil portion 73, a first end portion 74, and a second end portion 75. Since the second tension coil spring 71 and the second elastic member 72 have the same configurations as those of the first tension coil spring 61 and the first elastic member 62, the detailed descriptions are omitted accordingly.

In the straddled vehicle 1 according to the present embodiment described above, the urging force for opening the seat 6 is obtained by the first and second tension coil springs 61 and 71. Moreover, the damping force is obtained as the outer peripheries of the coil portions 63 and 73 and the inner peripheries of the first and second elastic members 62 and 72 come into contact with each other.

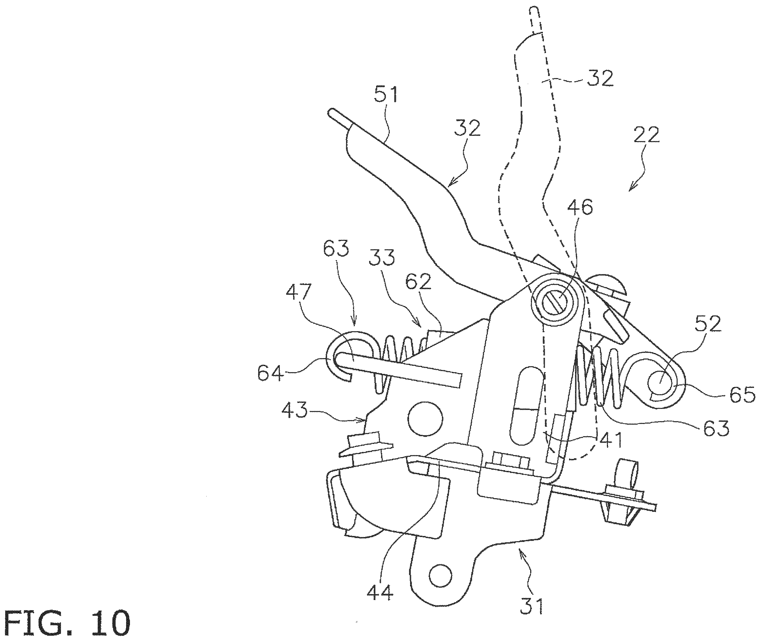

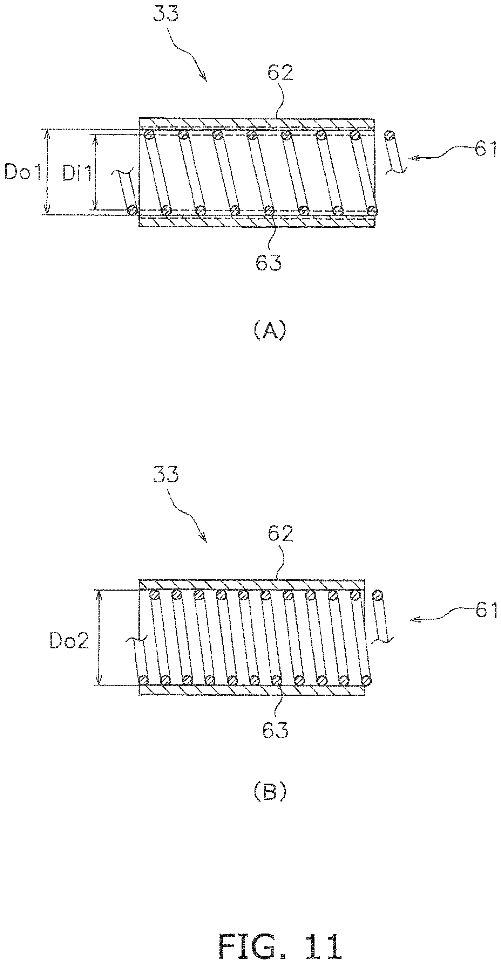

In FIG. 10 the broken line shows the opening/closing mechanism 22 in the fully-opened position. The second stay 32 of the opening/closing mechanism 22 is provided so as to be rotatable between the closed position shown by the solid line and the fully-opened position shown by the broken line. FIG. 11A is a schematic diagram showing a cross section of the first spring unit 33 in the closed position. FIG. 11B is a schematic diagram showing a cross section of the first spring unit 33 in the fully-opened position.

When the seat 6 is located in the closed position, an outer diameter (Do1) of the coil portion 63 of the first tension coil spring 61 is larger than an inner diameter (Di1) of the first elastic member 62 in a natural state thereof, as shown in FIG. 11A. Therefore, the outer periphery of the coil portion 63 is in contact with the inner periphery of the first elastic member 62. In addition, the coil portion 63 presses the first elastic member 62 radially outward. Consequently, the coil portion 63 receives from the first elastic member 62 a reaction force directed radially inward.

As shown in FIG. 10, when the second stay 32 rotates from the closed position toward the fully-opened position, the second connection portion 52 approaches the first connection portion 47. The first end portion 64 of the first tension coil spring 61 is fixed and does not move. Thus, the first tension coil spring 61 is compressed. Therefore, the first tension coil spring 61 contracts as the seat 6 is moved toward the fully-opened position by the urging force of the first tension coil spring 61. As a result of the contraction of the first tension coil spring 61, the outer diameter of the coil portion 63 of the first tension coil spring 61 increases from Do1 to Do2, whereby the inner diameter of the first elastic member 62 increases from Di1 to Di2. As a result, the reaction force from the first elastic member 62 provided around the first tension coil spring 61 becomes large. Consequently, as the seat 6 moves toward the fully-opened position, the reaction force from the first elastic member 62 increases the damping force applied to the seat 6. Although not shown, the second spring unit 34 has the same effects as the first spring unit 33 described above.

Therefore, in the beginning of opening the seat 6, not only is it possible to reduce the damping force, but also the damping force can be increased as the seat 6 moves toward the fully-opened position. Therefore, while reducing the operating force for opening the seat 6, the speed of the seat 6 can appropriately be set according to the degree of opening of the seat 6.

The opening/closing mechanism 22 can obtain the urging force and the damping force with such simple structures as the first and second tension coil springs 61 and 71 and the first and second elastic members 62 and 72 provided therearound. Thus, ample capacity can be secured in the storage box 21.

For example, in a case where a torsion spring is used in the opening/closing mechanism 22, accurate location precision is required for each of the members of the opening/closing mechanism when assembling the opening/closing mechanism, so that appropriate damping is realized. The opening/closing mechanism needs to be assembled in such a manner that, for example, the torsion spring and a hinge shaft are precisely in contact with each other. Such requirements complicate the assembly process.

However, in the straddled vehicle 1 according to the present embodiment, the opening/closing mechanism 22 has such simple structures as the first and second tension coil springs 61 and 71 and the first and second elastic members 62 and 72 provided therearound; the assembly process of the opening/closing mechanism 22 can be simplified.

Whether the seat 6 is in the closed position or the fully-opened position, the first and second tension coil spring 61 and 71 are in contact with the inner peripheries of the first and second elastic members 62 and 72 at all times. Therefore, the damping force can be obtained from the beginning of opening the seat 6. Thus, even in a case where the strokes of the first and second tension coil springs 61 and 71 are made short for the purpose of downsizing the vehicle, an auxiliary force of the opening/closing motion and the damping force on the seat 6 can easily be adjusted.

The first and second spring units 33 and 34 are located below the support portion 46. The first and second spring units 33 and 34 overlap with the second stay 32 in the plan view of the vehicle. Therefore, the opening/closing mechanism 22 can be downsized.

The first and second tension coil springs 61 and 71 are disposed so as to expand and contract in the front-rear direction of the vehicle. In this case, the stroke lengths of the first and second tension coil springs 61 and 71 are limited in order to secure a footrest space in front of the storage box 21. However, even in such a case, the auxiliary force of the opening/closing motion and the damping force on the seat 6 can easily be adjusted in the straddled vehicle 1 according to the present embodiment.

In the straddled vehicle 1 according to the present embodiment, the operation switch for opening the seat 6 is disposed away from the seat 6. However, appropriate urging force and damping force for opening and closing the seat 6 can be obtained by the opening/closing mechanism 22, improving the user-friendliness for the driver.

The above has described an embodiment of the present invention, but the present invention is not limited thereto, and various changes can be made without departing from the gist of the present invention.

The straddled vehicle is not limited to scooter type vehicles but may be other vehicles such as mopeds. The number of front wheels is not limited to one but may be two or more. The number of rear wheels is not limited to one but may be two or more. The engine does not have to be an internal combustion engine but may be an electric motor. The position of the operation switch may be changed.

The placement and/or structure of the opening/closing mechanism are not limited to those of the foregoing embodiment and may be changed. For example, the shape of the first stay 31 may be changed. The shape of the second stay 32 may be changed as well. The opening/closing mechanism 22 may not only be supported by the center frame 18 but also supported by other portions of the vehicle body frame 9, such as the seat frame 17.

The number of spring units is not limited to two but may be one, three, or more. The shapes of the spring units may be changed.

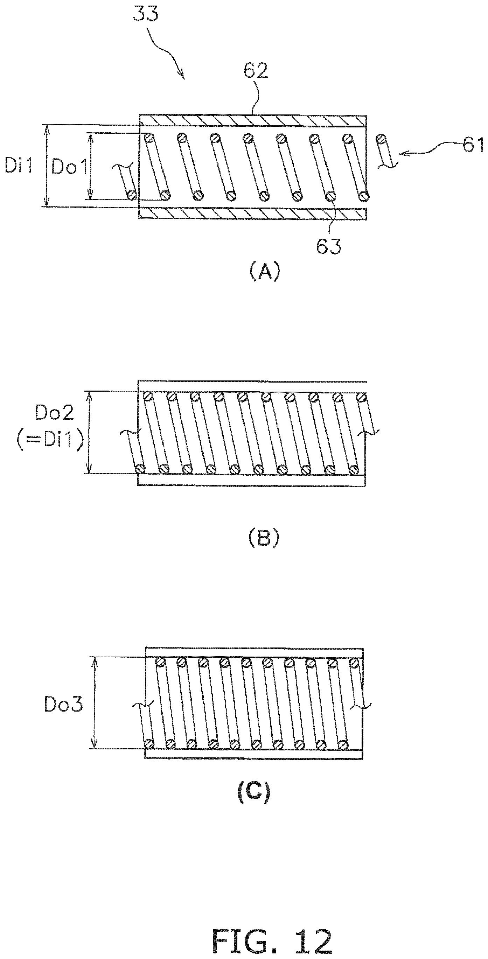

FIG 12A is a schematic diagram showing a cross section of the first spring unit 33 according to a modification, with the seat 6 located in the closed position. FIG 12B is a schematic diagram showing a cross section of the first spring unit 33 according to the modification, with the seat 6 located in an intermediate position between the closed position and the fully-opened position. FIG. 12C is a schematic diagram showing a cross section of the first spring unit 33 according to the modification, with the seat 6 located in the fully-opened position.

As shown in FIG. 12A, when the seat 6 is located in the closed position, the outer diameter (Do1) of the first tension coil spring 61 may be smaller than the inner diameter (Di1) of the first elastic member 62. Specifically, when the seat 6 is located in the closed position, the outer periphery of the coil portion 63 of the first tension coil spring 61 may not be in contact with the inner periphery of the first elastic member 62.

When the seat 6 moves from the closed position to the intermediate position, the outer diameter of the first tension coil spring 61 increases from Do1 to Do2, as shown in FIG. 12B. When the seat 6 is located in the intermediate position, the outer diameter Do2 of the first tension coil spring 61 may be equal to the inner diameter Di1 of the first elastic member 62.

The outer diameter of the first tension coil spring 61 increases as the seat 6 moves from the intermediate position toward the fully-opened position. Then, when the seat 6 moves from the intermediate position to the fully-opened position, the outer diameter of the first tension coil spring 61 increases from Do2 to Do3, as shown in FIG. 12C. As a result, the inner diameter of the first elastic member 62 increases from Di2 to Di3, increasing the reaction force which is received from the first elastic member 62 by the first tension coil spring 61. Although not shown, the configuration of the second spring unit 34 is the same as that of the first spring unit 33.

In this case, the auxiliary force of the opening/closing motion, which is obtained by the first and second spring units 33 and 34, acts in the beginning of opening the seat 6, but the damping force does not. The damping force can be obtained in the middle of opening the seat 6. Accordingly, the timing at which the damping force starts to become effective can appropriately be adjusted while reducing the operating force for opening the seat 6.

## Claims

1. A straddled vehicle (1), comprising:
a seat (6);
a storage box (21) disposed under the seat (6); and
an opening/closing mechanism (22) movably supporting the seat (6) between a closed position where the storage box (21) is closed and a fully-opened position where the storage box (21) is opened,
the opening/closing mechanism (22) including
a tension coil spring (61, 71),
**characterised in that** the tension coil spring (61, 71) is configured to assist a driver in opening the seat (6), the tension coil spring (61, 71) including a coil portion (63, 73); and
an elastic member (62, 72) located on an outer periphery of the coil portion (63, 73),
the tension coil spring (61, 71) being disposed so as to contract as the seat (6) moves toward the fully-opened position,
the outer periphery of the coil portion (63, 73) and an inner periphery of the elastic member (62, 72) being disposed so as to come into contact with each other at least before the seat reaches the fully-opened position.

2. The straddled vehicle (1) according to claim 1, wherein
the elastic member (62, 72) is in the shape of a tube including a through-hole, and
the tension coil spring (61, 71) is located in the through-hole of the elastic member (62, 72).

3. The straddled vehicle (1) according to claim 1 or 2, wherein
when the seat (6) is located in the closed position, an outer diameter of the tension coil spring (61, 71) is larger than an inner diameter of the elastic member (62, 72) in a natural state thereof,
the outer diameter of the tension coil spring (61, 71) is configured to increase as the seat (6) moves toward the fully-opened position.

4. The straddled vehicle (1) according to claim 1 or 2, wherein
when the seat (6) is located in the closed position, an outer diameter of the tension coil spring (61, 71) is smaller than an inner diameter of the elastic member (62, 72), and
when the seat (6) is located in a predetermined intermediate position between the closed position and the fully-opened position, the outer diameter of the tension coil spring (61, 71) is equal to the inner diameter of the elastic member (62, 72),
the outer diameter of the tension coil spring (61, 71) is configured to increase as the seat (6) moves toward the fully-opened position.

5. The straddled vehicle (1) according to any one of claims 1 to 4, further comprising:
a vehicle body frame (9);
a first stay (31) mounted on the vehicle body frame (9); and
a second stay (32) mounted on the seat (6) and supported so as to be rotatable with respect to the first stay (31),
wherein the tension coil spring (61, 71) includes a first end portion (64, 74) connected to the firststay (31) and a second end portion (65, 75) connected to the second stay (32).

6. The straddled vehicle (1) according to claim 5, wherein
the elastic member (62, 72) is disposed between the first end portion (64, 74) and the second end portion (65, 75).

7. The straddled vehicle (1) according to claim 5 or 6, wherein
the first stay (31) includes
a support portion (46) rotatably supporting the second stay (32); and
a first connection portion (47) connected to the first end portion (64, 74) of the tension coil spring (61, 71), and
the second stay (32) includes a second connection portion (52) connected to the second end portion (65, 75) of the tension coil spring (61, 71),
the first connection portion (47) is located rearward of the support portion (46), and
the second connection portion (52) is located forward of the support portion (46).

8. The straddled vehicle (1) according to claim 7, wherein
the first connection portion (47) and the second connection portion (52) are located below the support portion (46), and
the tension coil spring (61, 71) and the elastic member (62, 72) are located below the support portion (46).

9. The straddled vehicle (1) according to claim 7 or 8, wherein
the tension coil spring (61, 71) and the elastic member (62, 72) overlap with the second stay (32) in a plan view of the vehicle (1).

10. The straddled vehicle (1) according to any one of claims 1 to 9, wherein:
the tension coil spring (61, 71) is disposed so as to expand and contract in a front-rear direction of the vehicle (1).

11. The straddled vehicle (1) according to any one of claims 1 to 10, further comprising:
an operation switch (16) for opening the seat (6).

## Patentansprüche

1. Ein gespreiztes Fahrzeug (1), umfassend:
einen Sitz (6);
eine Aufbewahrungsbox (21), die unter dem Sitz (6) angeordnet ist; und
einen Öffnungs-/Schließmechanismus (22), der den Sitz (6) beweglich zwischen einer geschlossenen Position, in der die Aufbewahrungsbox (21) geschlossen ist, und einer vollständig geöffneten Position, in der die Aufbewahrungsbox (21) geöffnet ist, lagert,
wobei der Öffnungs-/ Schließmechanismus (22) beinhaltet
eine Zugschraubenfeder (61, 71), **dadurch gekennzeichnet, dass** die Zugschraubenfeder (61, 71) konfiguriert ist, einem Fahrer beim Öffnen des Sitzes (6) zu assistieren, wobei die Zugschraubenfeder (61, 71) einen Schraubenabschnitt (63, 73) beinhaltet; und
ein elastisches Element (62, 72), das an einer äußeren Peripherie des Schraubenabschnitts (63, 73) gelegen ist,
wobei die Zugschraubenfeder (61, 71) so angeordnet ist, dass sie kontrahiert, wenn sich der Sitz (6) in Richtung der vollständig geöffneten Position bewegt,
wobei die äußere Peripherie des Schraubenabschnitts (63, 73) und eine innere Peripherie des elastischen Elements (62, 72) so angeordnet sind, dass sie miteinander in Kontakt kommen, zumindest bevor der Sitz die vollständig geöffnete Position erreicht.

2. Das gespreizte Fahrzeug (1) nach Anspruch 1, wobei
das elastische Element (62, 72) in der Gestalt eines Rohrs, das ein Durchgangsloch beinhaltet, ist,
und die Zugschraubenfeder (61, 71) in dem Durchgangsloch des elastischen Elements (62, 72) angeordnet ist.

3. Das gespreizte Fahrzeug (1) nach Anspruch 1 oder 2, wobei,
wenn der Sitz (6) in der geschlossenen Position gelegen ist, ein Außendurchmesser der Zugschraubenfeder (61, 71) größer als ein Innendurchmesser des elastischen Elements (62, 72) in einem natürlichen Zustand davon ist,
der Außendurchmesser der Zugschraubenfeder (61, 71) konfiguriert ist, zuzunehmen, wenn sich der Sitz (6) in Richtung der vollständig geöffneten Position bewegt.

4. Das gespreizte Fahrzeug (1) nach Anspruch 1 oder 2, wobei, wenn der Sitz (6) in der geschlossenen Position gelegen ist, ein Außendurchmesser der Zugschraubenfeder (61, 71) kleiner als ein Innendurchmesser des elastischen Elements (62, 72) ist, und
wenn der Sitz (6) in einer vorbestimmten Zwischenposition zwischen der geschlossenen Position und der vollständig geöffneten Position gelegen ist, der Außendurchmesser der Zugschraubenfeder (61, 71) gleich dem Innendurchmesser des elastischen Elements (62, 72) ist,
der Außendurchmesser der Zugschraubenfeder (61, 71) konfiguriert ist, zuzunehmen, wenn sich der Sitz (6) in Richtung der vollständig geöffneten Position bewegt.

5. Das gespreizte Fahrzeug (1) nach einem der Ansprüche 1 bis 4, ferner umfassend:
einen Fahrzeugkörperrahmen (9);
eine erste Stütze (31), die an dem Fahrzeugkörperrahmen (9) montiert ist; und
eine zweite Stütze (32), die an dem Sitz (6) montiert ist und so gelagert ist, dass sie in Bezug auf die erste Stütze (31) drehbar ist,
wobei die Zugschraubenfeder (61, 71) einen ersten Endabschnitt (64, 74), der mit der ersten Stütze (31) verbunden ist, und einen zweiten Endabschnitt (65, 75) beinhaltet, der mit der zweiten Stütze (32) verbunden ist.

6. Das gespreizte Fahrzeug (1) nach Anspruch 5, wobei
das elastische Element (62, 72) zwischen dem ersten Endabschnitt (64, 74) und dem zweiten Endabschnitt (65, 75) angeordnet ist.

7. Das gespreizte Fahrzeug (1) nach Anspruch 5 oder 6, wobei die erste Stütze (31) beinhaltet einen Lagerabschnitt (46), der die zweite Stütze (32) drehbar lagert; und
einen ersten Verbindungsabschnitt (47), der mit dem ersten Endabschnitt (64, 74) der Zugschraubenfeder (61, 71) verbunden ist, und
die zweite Stütze (32) einen zweiten Verbindungsabschnitt (52) enthält, der mit dem zweiten Endabschnitt (65, 75) der Zugschraubenfeder (61, 71) verbunden ist,
der erste Verbindungsabschnitt (47) hinter dem Lagerabschnitt (46) gelegen ist, und
der zweite Verbindungsabschnitt (52) vor dem Lagerabschnitt (46) gelegen ist.

8. Das gespreizte Fahrzeug (1) nach Anspruch 7, wobei
der erste Verbindungsabschnitt (47) und der zweite Verbindungsabschnitt (52) unter dem Lagerabschnitt (46) gelegen sind, und
die Zugschraubenfeder (61, 71) und das elastische Element (62, 72) unter dem Lagerabschnitt (46) gelegen sind.

9. Das gespreizte Fahrzeug (1) nach Anspruch 7 oder 8, wobei
die Zugschraubenfeder (61, 71) und das elastische Element (62, 72) in einer Draufsicht des Fahrzeugs (1) mit der zweiten Stütze (32) überlappen.

10. Das gespreizte Fahrzeug (1) nach irgendeinem der Ansprüche 1 bis 9, wobei:
die Zugschraubenfeder (61, 71) so angeordnet ist, dass sie in einer vorne-hinten-Richtung des Fahrzeugs (1) expandiert und kontrahiert.

11. Das gespreizte Fahrzeug (1) nach irgendeinem der Ansprüche 1 bis 10, ferner umfassend: einen Betätigungsschalter (16) zum Öffnen des Sitzes (6).

## Revendications

1. Véhicule à selle (1) comprenant :
un siège (6),
un casier de stockage (21) disposé en dessous du siège (6), et
un mécanisme d'ouverture et fermeture (22) supportant le siège (6) tout en pouvant bouger entre une position fermé où le casier de stockage (21) est fermé et une position complètement ouvert où le casier de stockage (21) est ouvert,
le mécanisme d'ouverture et fermeture (22) incluant :
un ressort hélicoïdal de tension (61, 71),
**caractérisé en ce que** le ressort hélicoïdal de tension (61, 71) est configuré pour fournir une assistance à un pilote lors de l'ouverture du siège (6), le ressort hélicoïdal de tension (61, 71) incluant une partie hélicoïdale (63, 73), et
un élément élastique (62, 72) situé sur la périphérie externe de la partie hélicoïdale (63, 73),
le ressort hélicoïdal de tension (61, 71) étant disposé de sorte à se contracter lorsque le siège (6) se déplace vers la position complètement ouvert,
la périphérie externe de la partie hélicoïdale (63, 73) et la périphérie interne de l'élément élastique (62, 72) étant disposées de sorte à venir en contact l'une avec l'autre au moins avant que le siège atteigne la position complètement ouvert.

2. Véhicule à selle (1) selon la revendication 1, dans lequel :
l'élément élastique (62, 72) se présente sous la forme d'un tube incluant un trou traversant, et
le ressort hélicoïdal de tension (61, 71) est situé dans le trou traversant de l'élément élastique (62, 72).

3. Véhicule à selle (1) selon la revendication 1 ou la revendication 2, dans lequel :
lorsque le siège (6) est situé en position fermé, le diamètre externe du ressort hélicoïdal de tension (61, 71) est plus grand que le diamètre interne de l'élément élastique (62, 72) à l'état naturel de celui-ci,
le diamètre externe du ressort hélicoïdal de tension (61, 71) est configuré pour augmenter à mesure que le siège (6) bouge vers la position complètement ouvert

4. Véhicule à selle (1) selon la revendication 1 ou la revendication 2, dans lequel :
lorsque le siège (6) est situé en position fermé, le diamètre externe du ressort hélicoïdal de tension (61, 71) est plus petit que le diamètre interne de l'élément élastique (62, 72), et
lorsque le siège (6) est situé dans une position intermédiaire prédéterminée entre la position fermé et la position complètement ouvert, le diamètre externe du ressort hélicoïdal de tension (61, 71) est égal au diamètre interne de l'élément élastique (62, 72),
le diamètre externe du ressort hélicoïdal de tension (61, 71) est configuré pour augmenter à mesure que le siège (6) bouge vers la position complètement ouvert.

5. Véhicule à selle (1) selon l'une quelconque des revendications 1 à 4, comprenant en outre :
un cadre de véhicule (9),
un premier support (31) monté sur le cadre de véhicule (9), et
un second support (32) monté sur le siège (6) et supporté pour pouvoir tourner par rapport au premier support (31),
dans lequel le ressort hélicoïdal de tension (61, 71) inclut une première partie terminale (64, 74) accrochée au premier support (31) et une seconde partie terminale (65, 75) accrochée au second support (32).

6. Véhicule à selle (1) selon la revendication 5, dans lequel :
l'élément élastique (62, 72) est disposé entre la première partie terminale (64, 74) et la seconde partie terminale (65, 75).

7. Véhicule à selle (1) selon la revendication 5 ou la revendication 6, dans lequel :
le premier support (31) inclut :
une partie formant support (46) maintenant tout en pouvant tourner le second support (32), et
un premier organe de raccordement (47) raccordé à la première partie terminale (64, 74) du ressort hélicoïdal de tension (61, 71), et
le second support (32) inclut un second organe de raccordement (52) raccordé à la seconde partie terminale (65, 75) du ressort hélicoïdal de tension (61, 71),
le premier organe de raccordement (47) est situé à l'arrière de la partie formant support (46), et
le second organe de raccordement (52) est situé à l'avant de la partie formant support (46).

8. Véhicule à selle (1) selon la revendication 7, dans lequel :
le premier organe de raccordement (47) et le second organe de raccordement (52) sont situés en dessous de la partie formant support (46), et
le ressort hélicoïdal de tension (61, 71) et l'élément élastique (62, 72) sont situés en dessous de la partie formant support (46)

9. Véhicule à selle (1) selon la revendication 7 ou la revendication 8, dans lequel :
le ressort hélicoïdal de tension (61, 71) et l'élément élastique (62, 72) chevauchent le second support (32) dans une vue en plan du véhicule (1).

10. Véhicule à selle (1) selon l'une quelconque des revendications 1 à 9, dans lequel :
le ressort hélicoïdal de tension (61, 71) est disposé de sorte à se dilater et se contracter dans la direction avant arrière du véhicule (1).

11. Véhicule à selle (1) selon l'une quelconque des revendications 1 à 10, comprenant en outre :
un bouton de manœuvre (16) destiné à ouvrir le siège (6).
